# FASCICULE DE BREVET EUROPEEN

(11) **EP 3 401 830 B1**
(45) Date de publication et mention de la délivrance du brevet: **27.09.2023**
(21) Numéro de dépôt: 18171051.8
(22) Date de dépôt: 07.05.2018
(51) Int. Cl.: G06F 21/73, H01L 21/033, H01L 23/522, H01L 23/00, H04L 9/32

(54) **PROCÉDÉ DE SÉCURISATION D'UN CIRCUIT INTÉGRÉ LORS DE SA RÉALISATION**
VERFAHREN ZUR SICHERUNG EINES INTEGRIERTEN SCHALTKREISES BEI SEINER HERSTELLUNG
METHOD FOR SECURING AN INTEGRATED CIRCUIT DURING PRODUCTION

(30) Priorité: 10.05.2017 FR 1754078
(43) Date de publication de la demande: 14.11.2018
(73) Titulaire: Commissariat à l'énergie atomique et aux énergies alternatives, 75015 Paris (FR)
(72) Inventeur: MAY, Michael, 38430 SAINT JEAN DE MOIRANS (FR); PEBAY-PEYROULA, Florian, 38250 SAINT-NIZIER-DU-MOUCHEROTTE (FR)
(74) Mandataire: Brevalex

(56) Documents cités:
- US-A1- 2013 233 608
- US-A1- 2014 042 627
- US-A1- 2014 203 448

## Description

### DOMAINE TECHNIQUE

La présente invention concerne le domaine de sécurisation de circuits intégrés, notamment par des fonctions physiques non-clonables.

### ÉTAT DE LA TECHNIQUE ANTÉRIEURE

Actuellement, la contrefaçon des circuits intégrés pose un problème majeur pour les constructeurs et utilisateurs. Pour lutter contre cette contrefaçon, on cherche à trouver des moyens pour discriminer entre un circuit légitime et un circuit contrefait.

Une première solution consisterait à attribuer un identifiant unique pour chaque circuit intégré et à construire une base de données des identifiants légitimes. Cette solution n'est pas très viable car il s'avère assez simple d'émuler (ou de rejouer) un identifiant valide au moyen d'une verrue matérielle ou logicielle.

Une solution plus efficace consiste à utiliser un mécanisme de défi-réponse qui permet de réaliser une authentification en se protégeant de l'attaque par émulation (rejeu). Cette technique repose sur l'utilisation d'une fonction pour calculer la réponse à partir du défi. La fonction doit être unique pour chaque circuit intégré et non clonable. En effet, un attaquant ne doit pas être capable de recréer physiquement ou de cloner une telle fonction. Ce genre de fonctions est appelé « fonction physique non clonable » PUF (Physical Unclonable Function).

On connaît dans l'art antérieur des circuits intégrés comprenant différentes sortes de PUFs exploitant les dispersions fonctionnelles inhérentes aux circuits.

Une première technique de PUFs exploite la variabilité induite sur les temps de propagation des signaux aux limites des contraintes électroniques du circuit. Un premier exemple est un circuit intégré comprenant un PUF à arbitre consistant à insérerdes signaux électriques en entrée d'un long chemin de circuits combinatoires et à détecter le signal le plus rapide. Une course est établie dans le circuit entre les différents signaux qui se propagent suivant différents chemins combinatoires et le signal qui arrive en premier est détecté par l'arbitre. Les signaux électriques en entrée définissent le challenge ou défi et le signal détecté en premier définit la réponse.

Un autre exemple est le PUF à oscillateur en anneaux décrit dans le document de Gassend et al. Intitulé « Silicon Random Functions » ; proceedings of the Computer and Communications Security Conférence, Nov. 2002*.* Ce PUF est composé de plusieurs boucles de délais oscillant à des fréquences spécifiques et qui commandent des compteurs. Les boucles sont disposées de façons identiques mais les dispersions technologiques inhérentes conduisent à des boucles de fréquences légèrement différentes. Ainsi, les compteurs commandés par les boucles sont utilisés pour produire les bits de réponse à un défi.

Une deuxième technique de PUFs exploite les instabilités au démarrage. Par exemple, les mémoires SRAM, déjà présentes dans une grande majorité de circuits peuvent être utilisées comme des PUFs. Le principe de base est de récupérer l'état de la mémoire au démarrage qui est normalement unique. Sur un même principe le PUF peut être implémenté par des circuits papillons (butterfly) réalisés à partir des matrices de deux verrouillages croisés où l'état du point mémoire au démarrage est indéterminé. Cette technique est décrite dans le document de Kumar et al. intitulé « The Butterfly PUF : Protecting IP on every FPGA ; Workshop on Cryptographie Hardware and Embedded Systems (CHES), Sep 2007, Vienna*.* Dans le même genre, on trouve également des circuits à anneaux bistables composés d'un nombre impair d'inverseurs et ayant aussi un état indéterminé au démarrage.

Une troisième technique de PUFs exploite les dispersions technologiques des résistances dans un circuit. Une telle technique est décrite dans le document de R Helinski et al. intitulé « A Physical Unclonable Function Defined Using Power Distribution System Equivalent Resistance Variations » ; DAC 2009*.* Plus particulièrement, les auteurs proposent de mesurer la chute de tension dans un circuit intégré entre des plans d'alimentation et des plans de masse due aux dispersions technologiques des résistances définies par les pistes conductrices et les interconnexions du circuit. La chute de tension est proportionnelle au courant mesuré dans des inverseurs en court-circuit agencés sur toute la surface du circuit.

Toutefois, tous les PUFs décrits ci-dessus sont basés sur des fonctionnements aux limites des contraintes électroniques des circuits et sont par conséquents, très sensibles aux variations environnementales. En particulier, des changements de températures, de tensions d'alimentation ou des interférences électromagnétiques peuvent affecter leur performance en diminuant leur robustesse et en augmentant leur volatilité (i.e. leur variabilité intra-circuit). Ainsi, pour un défi constant, le PUF peut retourner des résultats différents selon les conditions environnementales impliquant le fait qu'un circuit légitime peut éventuellement être déclaré comme étant contrefait. Les demandes de brevet US2014/042627 A1, US2013/233608 A1 et US2014/203448 A1 font partie de l'état de l'art antérieur.

Un autre problème concerne le vieillissement du circuit intégré. En effet, à cause d'un fonctionnement aux limites des contraintes électroniques, le moindre petit défaut qui peut survenir lors du vieillissement du circuit fait que le PUF ne répond plus de la même manière et par conséquent, on ne peut plus identifier le circuit intégré.

Pour pallier à ces défauts, il est souvent nécessaire d'adjoindre au PUF un circuit de post-traitement de la réponse reçue qui est coûteux en termes d'empreinte et de consommation.

L'objet de la présente invention est de proposer un procédé de sécurisation d'un circuit intégré remédiant aux inconvénients précités, en particulier en réalisant un PUF quasiment insensible aux variations de conditions environnementales sans l'adjonction d'un circuit de post-traitement coûteux et sans l'introduction de modifications notables dans le procédé de fabrication du circuit.

### EXPOSÉ DE L'INVENTION

L'invention est définie par les revendications indépendantes 1 et 13.

Cet objectif est atteint avec un procédé de sécurisation d'un circuit intégré lors de sa réalisation, ledit procédé comportant les étapes suivantes :
- délimitation dudit circuit intégré en une première zone dite zone standard (correspondant à la fonctionnalité du circuit intégré) et en deuxième zone dite zone de sécurité (destinée à sécuriser le circuit intégré), et
- dégradation aléatoire d'une structure d'interconnexion de ladite zone de sécurité formant ainsi une fonction physique non-clonable modélisée par une continuité électrique aléatoire interrogeable par un protocole d'authentification défi-réponse.

Ceci permet d'identifier et de sécuriser le circuit intégré de manière robuste et insensible aux variations de conditions environnementales. Contrairement à l'art antérieur, ce procédé n'exploite pas des moyens non maîtrisés dans le fonctionnement électrique du circuit mais dans le procédé de fabrication lui-même.

La dégradation aléatoire de la structure d'interconnexion de ladite zone de sécurité est réalisée par l'introduction d'un élément contaminant configuré pour détériorer aléatoirement une partie des interconnexions.

Ainsi, le procédé exploite des moyens non maîtrisés dans la réalisation matérielle de la structure d'interconnexion.

Avantageusement, la structure d'interconnexion aléatoire est formée entre au moins deux niveaux correspondants de motifs conducteurs, une partie des motifs conducteurs étant configurée pour recevoir un défi, tandis qu'une autre partie des motifs conducteurs est configurée pour fournir la réponse audit défi. La réponse est ainsi dépendante de la continuité électrique de ladite structure d'interconnexion aléatoire propre à la puce électrique ainsi que du défi. Ceci permet de réaliser une authentification très sécurisée et protégée contre des attaques par rejeu.

Selon un mode de réalisation préféré de la présente invention, la sécurisation du circuit intégré s'intègre au niveau de la réalisation du back-end (i.e. lors de réalisation des premières interconnexions électriques) et comporte les étapes suivantes :
- réalisation d'un premier niveau de motifs conducteurs sur la surface desdites zones standard et de sécurité,
- dépôt sur la surface du premier niveau de motifs conducteurs d'une première multicouche comprenant une barrière à une diffusion métallique ainsi qu'un masque de gravure définissant un ensemble de trous d'interconnexion,
- dépôt sur ladite première multicouche d'au moins une deuxième couche de résine photosensible,
- lithographie optique dans la zone de sécurité pour insoler les trous d'interconnexion prévus dans cette zone de sécurité,
- dépôt de particules contaminantes de taille et de forme prédéterminées sur la surface des zones standard et de sécurité, les particules obstruant partiellement ou totalement de manière aléatoire une partie desdits trous d'interconnexion de la zone de sécurité, le dépôt de particules contaminantes permettant d'éviter une copolymérisation des copolymères sur le circuit assurant ainsi un caractère très aléatoire,
- transfert des trous d'interconnexion obstrués ou non obstrués dans le masque de gravure,
- nettoyage de la surface des zones standard et de sécurité pour retirer la deuxième couche de résine photosensible et les particules contaminantes,
- dépôt sur la surface des zones standard et de sécurité d'au moins une troisième couche de résine photosensible,
- lithographie optique dans la zone standard pour insoler les trous d'interconnexion prévus dans la zone standard,
- transfert dans la zone standard des trous d'interconnexion dans le masque de gravure,
- re-nettoyage de la surface des zones standard et de sécurité pour retirer la troisième couche de résine photosensible,
- transfert dans la couche de barrière à diffusion métallique et remplissage par un métal des trous d'interconnexion dans les zones standard et de sécurité, et
- réalisation d'un deuxième niveau de motifs conducteurs sur la surface des zones standard et de sécurité.

Ainsi, la partie aléatoire est dans le procédé de fabrication et non pas dans des masques ou gravures différentes. En outre, l'ensemble des étapes successives sont régulées et contrôlées afin d'assurer une variabilité extrêmement faible des paramètres clé de fonctionnalité des circuits intégrés. De plus, du fait que la réalisation de la structure aléatoire d'interconnexion est non maîtrisée, le coût de clonage devient excessivement élevé et la rétro-ingénierie, autant par imagerie que par apprentissage, est extrêmement difficile.

Les particules sont avantageusement choisies de façon adéquate par rapport à leur taille pour optimiser les trous d'interconnexion de la façon la plus aléatoire possible.

Avantageusement, les particules présentent un diamètre sensiblement égal ou supérieur à celui des trous d'interconnexion. Ceci permet de minimiser le nombre de trous partiellement obstrués. On notera que la taille des particules peut également être invariablement plus grande ou plus petite que les trous d'interconnexion.

Avantageusement, les particules sont des billes en polystyrène, en poly-méthacrylate-de-méthyle « PMMA » ou en polymère quelconque de type « compatible-salle-blanche ». Ceci permet d'avoir des particules de la même nature chimique que la résine photosensible facilitant le nettoyage tout en étant compatibles d'être utilisées en salle-blanche.

Avantageusement, les particules peuvent être déposées par vaporisation ou par tournette d'une solution liquide ayant une concentration d'environ 0,5% à 2% en masse et de préférence 1% en masse. Ceci permet d'avoir une concentration suffisamment faible pour ne pas obstruer l'intégralité des trous d'interconnexion tout en obstruant un nombre optimal de ces trous. La valeur de concentration des particules est avantageusement sélectionnée selon la taille des particules.

Avantageusement, le procédé peut comporter une étape de recuit thermique après le dépôt des particules. Ceci permet d'augmenter l'adhésion de ces particules.

Le procédé comporte une application d'une tension supérieure à la tension de lecture pour claquer des interconnexions partielles fragiles. Ceci permet de supprimer les contacts fragiles et ainsi de quasiment supprimer toute variation par vieillissement.

Avantageusement, le procédé comporte la réalisation d'une pluralité de structures d'interconnexion aléatoire et d'une pluralité de niveaux correspondants de motifs conducteurs. Ceci permet de sécuriser davantage le circuit intégré par la technique de défi-réponse.

Selon un autre mode de réalisation de la présente invention, la sécurisation du circuit intégré est réalisée au niveau du front-end.

L'invention concerne également un circuit intégré sécurisé pouvant être obtenu à l'aide d'un procédé selon l'invention.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
La Fig. 1 illustre de manière très schématique un procédé de sécurisation d'un circuit intégré, selon un mode de réalisation de l'invention ;
La Fig. 2 illustre de manière très schématique une vue en coupe d'un circuit intégré sécurisé réalisé par le procédé de sécurisation selon un mode de réalisation de l'invention ; et
Les Figs. 3A-3K illustrent de manière très schématique des étapes d'un procédé de sécurisation d'un circuit intégré, selon un mode de réalisation préféré de l'invention.

### EXPOSÉ DÉTAILLÉ DE MODES DE RÉALISATION PARTICULIERS

Le concept à la base de l'invention est la dégradation volontaire et aléatoire d'un niveau d'interconnexion métallique lors de sa réalisation par l'introduction contrôlé d'un contaminant.

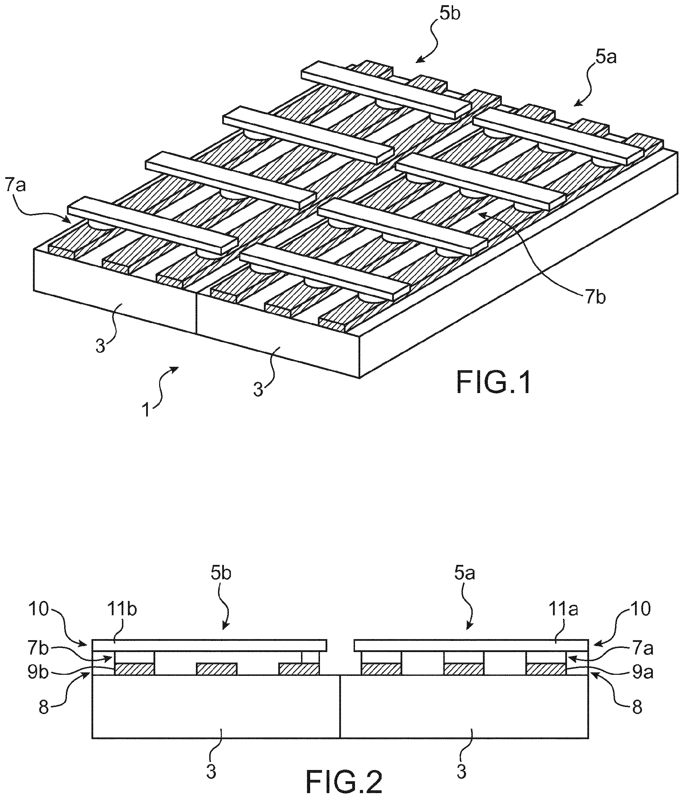

La Fig. 1 illustre de manière très schématique un procédé de sécurisation d'un circuit intégré, selon un mode de réalisation de l'invention.

Le procédé de sécurisation selon l'invention s'intègre parfaitement dans le procédé de fabrication en tant que tel du circuit intégré 1 sur une plaque de silicium 3. Dans le procédé de fabrication, les motifs sur la plaque de silicium 3 sont créés selon une méthode de photo-répétition rendant chaque circuit intégré identique aux autres. L'ensemble des étapes successives sont régulées et contrôlées afin d'assurer une variabilité extrêmement faible des paramètres fonctionnels des circuits intégrés. Toutefois, la méthode de fabrication comporte des étapes d'implémentations physiques intrinsèquement aléatoires introduisant des caractéristiques discernables qui assurent l'unicité de chaque circuit intégré 1 sans modifier leurs paramètres fonctionnels initiaux.

En effet, lors de la réalisation habituelle du circuit intégré 1 (ou puce électronique), le procédé de sécurisation comporte la délimitation du circuit intégré 1 en une première zone surfacique dite zone standard 5a et en une deuxième zone surfacique dite zone de sécurité 5b. La zone standard 5a correspond à la partie fonctionnelle du circuit intégré 1 de base. Cette zone 5a est occupée par les composants électroniques de base couplés par des interconnexions métalliques 7a adaptées pour réaliser les fonctions particulières du circuit. En revanche, la zone de sécurité 5b est occupée par une fonction physique non-clonable PUF destinée à sécuriser le circuit de base. Comme représenté dans le mode de réalisation de la Fig. 1, la zone surfacique standard est distincte de la zone surfacique de sécurité. Le fait que le circuit de sécurité et le circuit fonctionnel sont disposés l'un à côté de l'autre permet de réaliser les étapes sur les deux zones simultanément, ce qui facilite et réduit le nombre d'étapes du procédé.

Plus particulièrement, lors de la fabrication d'une structure d'interconnexion 7b dans la zone de sécurité 5b, le procédé de sécurisation comporte la dégradation aléatoire de cette structure d'interconnexion 7b pour former la fonction physique non-clonable PUF. La structure d'interconnexion 7b de la zone de sécurité 5b est modélisée par une continuité électrique aléatoire qui peut être interrogeable par un protocole d'authentification défi-réponse.

La Fig. 2 illustre de manière très schématique une vue en coupe d'un circuit intégré sécurisé réalisé par le procédé de sécurisation selon un mode de réalisation de l'invention.

Le circuit intégré sécurisé (ou puce électronique sécurisée) comporte ainsi une zone standard 5a et une zone de sécurité 5b. La zone standard 5a comporte de manière habituelle au moins deux niveaux de pistes conductrices 9a et 11a connectées via des interconnexions métalliques 7a aux différents composants électroniques (non représentés) du circuit intégré 1.

La zone de sécurité 5b comporte une structure d'interconnexion aléatoire 7b formée entre au moins deux niveaux 8 et 10 de motifs conducteurs 9b et 11b correspondants adaptés pour tester la continuité électrique de cette structure d'interconnexion aléatoire 7b. On notera que les motifs conducteurs 9b et 11b peuvent être de forme ou de configuration quelconques selon la complexité recherchée. Par exemple, les motifs conducteurs 9b et 11b peuvent être formés par un ensemble (par exemple, quelques dizaines) de grilles ou pistes conductrices croisées ou de toute autre forme. Avantageusement, la zone de sécurité 5b peut comporter une pluralité de structures d'interconnexion aléatoire 7b (une seule est représentée) et une pluralité de niveaux correspondants de motifs conducteurs (seuls deux niveaux sont représentés) permettant ainsi d'augmenter la complexité du PUF.

La ou les structure(s) d'interconnexion aléatoire 7b modélise(nt) une continuité électrique entre les différents motifs conducteurs qui peuvent être utilisés pour appliquer un protocole d'authentification défi-réponse. Plus particulièrement, une partie des motifs conducteurs 9b et 11b est configurée pour recevoir un stimulus définissant un défi, tandis qu'une autre partie des motifs conducteurs 9b et 11b est configurée pour fournir un signal de sortie correspondant à la réponse au défi. La réponse est ainsi dépendante de la continuité électrique de la structure d'interconnexion aléatoire propre à la puce électronique ainsi qu'au défi utilisé. Les motifs conducteurs recevant le stimulus forment une entrée du circuit intégré tandis que ceux fournissant la réponse forment la sortie du circuit intégré. Les motifs conducteurs sélectionnés pour former l'entrée ou la sortie sont prédéterminés selon les spécifications du protocole d'authentification.

Chaque circuit intégré 1 issu du procédé de sécurisation dispose ainsi dans sa zone de sécurité 5b d'une structure physique d'interconnexion 7b unique dont le processus de fabrication est aléatoire et non maîtrisé et par conséquent, excessivement difficile à cloner.

Après la réalisation des circuits intégrés sécurisés, on procède à une phase « d'enrôlement » (enrollment, en anglais) qui consiste à construire une base de données contenant des couples légitimes de « défi-réponse » pour chaque circuit intégré 1. Concrètement, pour chaque circuit intégré 1, un testeur génère aléatoirement un certain nombre N de défis ou challenges C et les adresse au circuit intégré 1. Chaque défi C est constitué d'un stimulus qui est appliqué à l'entrée du circuit intégré 1 et la réponse R à chaque défi C est récupérée à la sortie du circuit intégré 1. En effet, le PUF qui définit une fonction secrète F calcule la réponse R à chaque défi C (i.e. R=F(C)). Le testeur récupère les N réponses R associées aux N défis C et stocke les N couples de défi-réponse (C, R) correspondants dans une base de données (non représentée).

Ainsi, l'authentification d'un circuit intégré 1 sécurisé peut être testée tout au long de son cycle de vie. Plus particulièrement, un utilisateur d'un circuit intégré 1 peut demander au fabricant (ou à l'entité qui possède la base de données des couples de défi-réponse) un défi (ou un couple défi-réponse). Le défi C est appliqué au circuit intégré 1 et ce dernier calcule la réponse R au défi C. Ensuite, l'utilisateur (ou le fabriquant) compare la réponse R générée par le circuit intégré 1 avec celle stockée dans la base de données afin de vérifier la légitimité du circuit intégré 1. On notera que pour plus de sécurité, le couple défi-réponse déjà utilisé est ensuite supprimé de la base de données pour éviter tout rejeu.

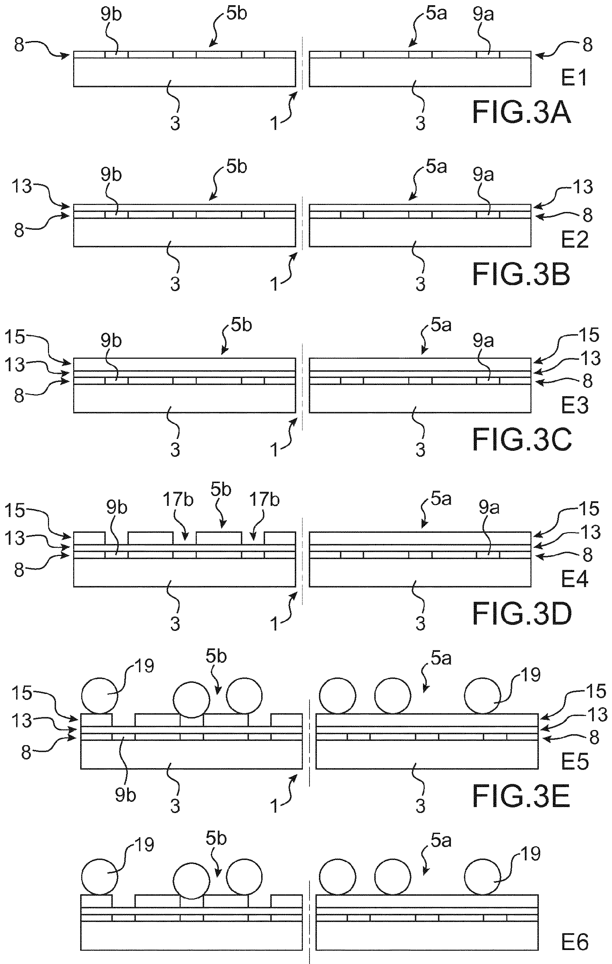

Les Figs. 3A-3K illustrent de manière très schématique des étapes d'un procédé de sécurisation d'un circuit intégré, selon un mode de réalisation préféré de l'invention.

De manière connue par l'homme du métier, on considère que la fabrication du circuit intégré 1 sur la zone standard 5a a été préalablement réalisée selon les étapes habituelles de préparation d'une couche d'oxyde sur un substrat, de transfert du dessin du circuit à reproduire à l'aide d'un masque, de gravure, de dopage, de réalisation de couches suivantes, etc.

Ainsi, on commence avec une plaque 3 délimitée en une zone de sécurité 5b et une zone standard 5a dont tout le procédé de fabrication dite « front-end » a été réalisé, c'est-à-dire que quasiment l'intégralité du circuit qu'on cherche à sécuriser a été fabriquée.

Selon ce mode de réalisation, la sécurisation du circuit intégré 1 commence alors à la fin du front-end et s'intègre dans la suite des étapes de fabrication de composés semiconducteur au niveau du « back-end », c'est-à-dire, lors de la réalisation des premières interconnexions électriques pour adéquatement interconnecter les composants entre eux ainsi qu'avec des électrodes d'entrées-sorties.

La Fig. 3A illustre de manière très schématique une première étape du procédé de sécurisation.

La première étape E1 (Fig. 3A) consiste à la réalisation d'un premier niveau 8 de motifs conducteurs 9a et 9b sur la surface des zones standard 5a et de sécurité 5b de la plaque 3. Les motifs conducteurs 9a et 9b peuvent être en cuivre, en aluminium ou en un autre matériau conducteur d'électricité. On notera que cette étape peut être considérée comme une dernière étape déjà réalisée au niveau du « front-end » du procédé de fabrication du circuit intégré.

La deuxième étape E2 (Fig. 3B) consiste à déposer une première multicouche 13 sur la surface du premier niveau 8 comprenant les motifs conducteurs 9a et 9b. La première multicouche 13 comprend une barrière à une diffusion métallique ainsi qu'un masque dur de gravure définissant un ensemble de trous d'interconnexion dits « vias » ayant une forme générale cylindrique. Cette première multicouche 13 est par exemple une bicouche composée d'une couche de SiN ayant la fonction de barrière et d'une couche de SiO₂ ayant la fonction de masque de gravure.

La troisième étape E3 (Fig. 3C) consiste à déposer au moins une couche 15 de résine photosensible sur la première multicouche 13. En particulier, on peut déposer un empilement de couches 15 servant à la réalisation de la lithographie optique de l'étape suivante. Cet empilement de couches 15 peut être composé à titre d'exemple, de deux couches de masque de gravure de type « tournette sur carbone » SOC (Spin On Carbon) et de « revêtement de silicone anti réfléchissante SiARC (Silicon Anti Reflective Coating) ainsi que d'une couche de résine photosensible. Les épaisseurs de ces trois couches peuvent varier selon la nature des produits employés ainsi que les dimensions des vias visées. Elles sont typiquement de l'ordre de 150nm pour le SOC, de l'ordre de 30nm pour le SiARC et de l'ordre de 100nm pour la résine photosensible. Toutes ces couches peuvent être déposées par la méthode connue de « revêtement par tournette » (spin coating). Avantageusement, le fait que la couche de résine photosensible soit de la même matière que les particules contaminantes (voir étape E5) permet d'assurer une adhésion quasi-instantanée des particules et évite qu'elles aillent toutes dans les trous des vias.

La quatrième étape E4 (Fig. 3D) consiste à procéder à la lithographie optique dans la zone de sécurité 5b pour insoler les trous d'interconnexion 17b (vias) prévue dans cette zone 5b. On notera que la zone standard 5a reste protégée par la deuxième couche 15 de résine photosensible. Ainsi, la lithographie optique est réalisée uniquement sur le circuit de sécurité.

La cinquième étape E5 (Fig. 3E) consiste à déposer des particules 19 contaminantes de taille et de forme prédéterminées sur la surface des zones standard 5a et de sécurité 5b. La taille, la forme et le matériau des particules sont avantageusement choisis de façon adéquate pour optimiser les trous d'interconnexion de la façon la plus aléatoire possible. Les particules 19 peuvent être déposées par vaporisation ou par tournette (spin coating) d'une solution liquide ayant une concentration suffisamment faible pour ne pas obstruer l'intégralité des trous d'interconnexion 17b tout en obstruant un nombre optimal de ces trous. Ainsi, la densité des particules 19 peut être ajustée par la concentration de la solution liquide utilisée. La valeur de la concentration des particules est avantageusement sélectionnée selon la taille des particules. A titre d'exemple, cette concentration peut être comprise entre 0,5% et 2% en masse et de préférence de l'ordre de 1% en masse. Ainsi, les particules 19 obstruent partiellement ou totalement de manière aléatoire une partie des trous d'interconnexion 17b de la zone de sécurité 5b.

Avantageusement, les particules 19 présentent un diamètre sensiblement égal ou supérieur à celui des trous d'interconnexion 17b afin de minimiser le nombre de trous partiellement obstrués. Cela permet d'éviter que les particules bouchent tous les trous destinés à former des vias. La méthode de dépôt par vaporisation ou tournette améliore également cet aspect. On notera que la taille des particules peut également être invariablement plus grande ou plus petite que les trous d'interconnexion.

En outre, les particules 19 contaminantes sont avantageusement des billes en une matière quelconque compatible-salle-blanche (i.e. adaptées pour être utilisées dans une salle blanche) et de préférence d'une même nature chimique que la résine photosensible. Avantageusement, les particules sont en un matériau polymère sélectionné par exemple parmi les matériaux suivants : polystyrène, poly-méthacrylate-de-méthyle « PMMA », et polyhydroxystyrène.

Avantageusement, après le dépôt des particules 19, on peut procéder à une étape de recuit thermique qui permet d'augmenter l'adhésion de ces particules.

La sixième étape E6 (Fig. 3F) consiste à transférer des trous d'interconnexion 17b obstrués ou non obstrués dans le masque de gravure. Le caractère aléatoire est ainsi dans le procédé de fabrication et non pas dans des masques ou gravures différentes.

On notera que cette étape de transfert peut être réalisée de manière partiellement sélective afin de ne pas permettre la gravure des plus petites ouvertures des trous, limitant ainsi le nombre de vias partiellement ouverts.

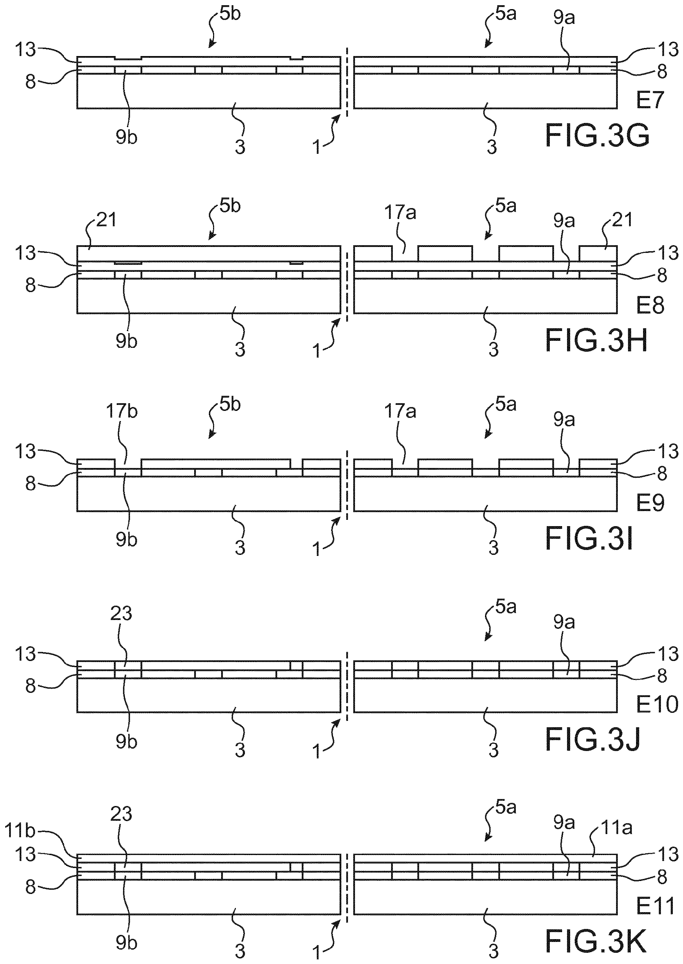

La septième étape E7 (Fig. 3G) consiste à nettoyer la surface des zones standard 5a et de sécurité 5b afin de retirer la deuxième couche 15 de résine photosensible et les particules 19 contaminantes. En effet, en choisissant le matériau des particules 19 de même nature chimique que celui de la résine, le retrait des deux se fait simultanément.

La huitième étape E8 (Fig. 3H) reprend le cours de fabrication habituel du circuit comme initialement prévu dans la zone standard 5a. Ainsi, au moins une troisième couche 21 de résine photosensible est d'abord déposée sur la surface des zones standard 5a et de sécurité 5b. Ensuite, on procède à une lithographie optique dans la zone standard 5a pour isoler les trous d'interconnexion 17a (vias) prévus dans cette zone 5a.

La neuvième étape E9 (Fig. 3I) consiste à transférer les trous d'interconnexion 17a de la zone standard 5a dans le masque de gravure. Ensuite, la surface des zones standard 5a et de sécurité 5b est re-nettoyée pour retirer la troisième couche 21 de résine photosensible.

La dixième étape E10 (Fig. 3J) consiste à transférer les trous d'interconnexion 17a et 17b de la zone standard 5a et de la zone de sécurité 5b dans la couche de barrière à diffusion métallique et à remplir ces trous d'interconnexion 17a et 17b par un métal 23 par exemple, en cuivre ou en aluminium. Le remplissage peut être réalisé de manière sélective afin de ne pas remplir les plus petites ouvertures.

La onzième étape E11 (Fig. 3K) consiste à réaliser un deuxième niveau de motifs conducteurs 11a, 11b sur la surface des zones standard 5a et de sécurité 5b respectivement.

Ce mode de réalisation montre que l'ensemble des étapes successives sont régulées et contrôlées afin d'assurer une variabilité extrêmement faible des paramètres clés de fonctionnalité du circuit dans la zone standard 5a tout en permettant par construction une réalisation non maîtrisée de la structure aléatoire d'interconnexion 7b dans la zone de sécurité 5b. Ceci renforce l'unicité de chaque puce électronique 1 permettant son identification de manière très précise tout en rendant le clonage extrêmement difficile.

Avantageusement, afin d'éviter toute variation par vieillissement, on procède à un traitement électrique pour supprimer les interconnexions partielles fragiles dans la zone de sécurité 5b. Plus particulièrement, on applique une tension supérieure à la tension de lecture pour claquer les interconnexions partielles très fines ayant une résistance trop élevée. En outre, pour tester l'authenticité d'un circuit intégré 1, on peut lui appliquer un signal de défi présentant une intensité de courant très faible qui préserve l'identité du circuit tout au long de son cycle de vie.

On notera que le mode de réalisation du procédé de sécurisation selon les Figs. 3A-3K est transposable au « Front End », c'est-à-dire, lors de la fabrication des circuits logiques.

## Revendications

1. Procédé de sécurisation d'un circuit intégré lors de sa réalisation, ledit procédé comportant les étapes suivantes :
- délimitation dudit circuit intégré (1) en une première zone surfacique dite zone standard (5a) et en deuxième zone surfacique dite zone de sécurité (5b),
- dégradation aléatoire d'une structure d'interconnexion (7b) de ladite zone de sécurité (5b) par l'introduction d'un élément contaminant (19) configuré pour détériorer aléatoirement une partie des interconnexions formant ainsi une fonction physique non-clonable modélisée par une continuité électrique aléatoire interrogeable par un protocole d'authentification défi-réponse, et le dit procédé étant **caractérisé par** l'étape suivante :
- application d'une tension supérieure à une tension de lecture pour claquer des interconnexions partielles fragiles.

2. Procédé selon la revendication 1, **caractérisé en ce que** la structure d'interconnexion aléatoire (7b) est formée entre au moins deux niveaux (8, 10) correspondants de motifs conducteurs (9b, 11b), une partie des motifs conducteurs étant configurée pour recevoir un défi, tandis qu'une autre partie des motifs conducteurs est configurée pour fournir la réponse audit défi.

3. Procédé selon la revendication 1 ou 2, **caractérisé en ce que** la sécurisation du circuit intégré s'intègre au niveau de la réalisation de premières interconnexions électriques et comporte les étapes suivantes :
- réalisation d'un premier niveau (8) de motifs conducteurs (9a, 9b) sur la surface desdites zones standard (5a) et de sécurité (5b),
- dépôt sur la surface du premier niveau (8) de motifs conducteurs (9a, 9b) d'une première multicouche (13) comprenant une barrière à une diffusion métallique ainsi qu'un masque de gravure définissant un ensemble de trous d'interconnexion,
- dépôt sur ladite première multicouche (13) d'au moins une deuxième couche (15) de résine photosensible,
- lithographie optique dans la zone de sécurité (5b) pour isoler les trous d'interconnexion (17b) prévus dans cette zone de sécurité.

4. Procédé selon la revendication 3, **caractérisé en ce qu'**il comporte en outre le dépôt de particules contaminantes (19) de taille et de forme prédéterminées sur la surface des zones standard (5a) et de sécurité (5b), les particules (19) obstruant partiellement ou totalement de manière aléatoire une partie desdits trous d'interconnexion (17b) de la zone de sécurité (5b).

5. Procédé selon la revendication 4, **caractérisé en ce qu'**il comporte en outre les étapes suivantes :
- transfert des trous d'interconnexion obstrués ou non obstrués dans le masque de gravure,
- nettoyage de la surface des zones standard (5a) et de sécurité (5b) pour retirer la deuxième couche (15) de résine photosensible et les particules contaminantes (19),
- dépôt sur la surface des zones standard (5a) et de sécurité (5b) d'au moins une troisième couche (21) de résine photosensible,
- lithographie optique dans la zone standard (5a) pour isoler les trous d'interconnexion (17a) prévus dans la zone standard (5a).

6. Procédé selon la revendication 5, **caractérisé en ce qu'**il comporte en outre les étapes suivantes :
- transfert des trous d'interconnexion (17a) de la zone standard (5a) dans le masque de gravure,
- re-nettoyage de la surface des zones standard (5a) et de sécurité (5b) pour retirer la troisième couche (21) de résine photosensible,
- transfert dans la couche de barrière à diffusion métallique et remplissage par un métal (23) des trous d'interconnexion (17a, 17b) dans les zones standard (5a) et de sécurité (5b), et
- réalisation d'un deuxième niveau (10) de motifs conducteurs (11a, 11b) sur la surface des zones standard (5a) et de sécurité (5b).

7. Procédé selon la revendication 4, **caractérisé en ce que** les particules contaminantes (19) présentent un diamètre sensiblement égal ou supérieur à celui des trous d'interconnexion.

8. Procédé selon la revendication 4, **caractérisé en ce que** les particules contaminantes (19) sont des billes en un matériau polymère utilisable en salle-blanche, et de préférence, en polystyrène ou en poly-méthacrylate-de-méthyle.

9. Procédé selon l'une quelconque des revendications 4 à 8, **caractérisé en ce que** les particules contaminantes (19) sont déposées par vaporisation ou par tournette d'une solution liquide ayant une concentration d'environ 0,5% à 2% en masse sélectionnée selon la taille des particules.

10. Procédé selon l'une quelconque des revendications 4 à 9, **caractérisé en ce qu'**il comporte après le dépôt des particules contaminantes (19) une étape de recuit thermique.

11. Procédé selon l'une quelconque des revendications précédentes, **caractérisé en ce qu'**il comporte la réalisation d'une pluralité de structures d'interconnexion aléatoire et d'une pluralité de niveaux correspondants de motifs conducteurs.

12. Procédé selon l'une quelconque des revendications précédentes, **caractérisé en ce que** la sécurisation du circuit intégré est réalisée au niveau de la fabrication de circuits logiques.

13. Circuit intégré sécurisé réalisé par le procédé selon l'une quelconque des revendications précédentes.

## Patentansprüche

1. Verfahren zum Sichern eines integrierten Schaltkreises während seiner Herstellung, wobei das Verfahren die folgenden Schritte umfasst:
- Abgrenzen des integrierten Schaltkreises (1) in eine erste Oberflächenzone, die als Standardzone (5a) bezeichnet wird, und eine zweite Oberflächenzone, die als Sicherheitszone (5b) bezeichnet wird,
- zufälliges Verschlechtern einer Verbindungsstruktur (7b) der Sicherheitszone (5b) durch Einführen eines kontaminierenden Elements (19), das dazu konfiguriert ist, einen Teil der Verbindungsstruktur zufällig zu verschlechtern, wodurch eine nicht klonbare physikalische Funktion gebildet wird, die durch eine zufällige elektrische Kontinuität modelliert wird, die durch ein Challenge-Response-Authentifizierungsprotokoll abgefragt werden kann, und wobei das Verfahren durch den folgenden Schritt gekennzeichnet ist:
- Anlegen einer Spannung, die höher als eine Lesespannung ist, um fragile Teilverbindungen aufzuheben.

2. Verfahren nach Anspruch 1, **dadurch gekennzeichnet, dass** die zufällige Verbindungsstruktur (7b) zwischen mindestens zwei entsprechenden Ebenen (8, 10) von leitenden Mustern (9b, 11b) ausgebildet ist, wobei ein Teil der leitenden Muster dazu konfiguriert ist, eine Challenge zu empfangen, während ein anderer Teil der leitenden Muster dazu konfiguriert ist, eine Antwort auf die Challenge zu liefern.

3. Verfahren nach Anspruch 1 oder 2, wobei die Sicherheit des integrierten Schaltkreises beim Herstellen der ersten elektrischen Verbindungen integriert wird und die folgenden Schritte umfasst:
- Herstellen einer ersten Ebene (8) von leitenden Mustern (9a, 9b) auf der Oberfläche der Standardzone (5a) und der Sicherheitszone (5b),
- Aufbringen einer ersten Mehrschicht (13), die eine Barriere gegen Metalldiffusion sowie eine Ätzmaske umfasst, die einen Satz Verbindungslöcher definiert, auf der Oberfläche der ersten Ebene (8) von leitenden Mustern (9a, 9b),
- Aufbringen mindestens einer zweiten Schicht (15) aus lichtempfindlichem Harz auf der ersten Mehrschicht (13),
- optische Lithographie in der Sicherheitszone (5b), um die in der Sicherheitszone vorgesehenen Verbindungslöcher (17b) zu isolieren.

4. Verfahren nach Anspruch 3, **dadurch gekennzeichnet, dass** es ferner das Aufbringen von kontaminierenden Partikeln (19) mit einer vorbestimmten Größe und Form auf der Oberfläche der Standardzone (5a) und der Sicherheitszone (5b) umfasst, wobei die Partikel (19) einen Teil der Verbindungslöcher (17b) in der Sicherheitszone (5b) teilweise oder vollständig zufällig blockieren.

5. Verfahren nach Anspruch 4, **dadurch gekennzeichnet, dass** es ferner die folgenden Schritte umfasst:
- Übertragen blockierter oder nicht blockierter Verbindungslöcher in der Ätzmaske,
- Reinigen der Oberfläche der Standardzone (5a) und der Sicherheitszone (5b), um die zweite Schicht (15) aus lichtempfindlichem Harz und die kontaminierenden Partikel (19) zu entfernen,
- Aufbringen mindestens einer dritten Schicht (21) aus lichtempfindlichem Harz auf der Oberfläche der Standardzone (5a) und der Sicherheitszone (5b),
- optische Lithographie in der Standardzone (5a), um die in der Standardzone (5a) vorgesehenen Verbindungslöcher (17a) zu isolieren.

6. Verfahren nach Anspruch 5, **dadurch gekennzeichnet, dass** es ferner die folgenden Schritte umfasst:
- Übertragen von Verbindungslöchern (17a) der Standardzone (5a) in der Ätzmaske,
- erneutes Reinigen der Oberfläche der Standardzone (5a) und der Sicherheitszone (5b), um die dritte Schicht (21) aus lichtempfindlichem Harz zu entfernen,
- Übertragen von Verbindungslöchern (17a, 17b) in der Standardzone (5a) und der Sicherheitszone (5b) in die Metalldiffusionssperrschicht und Füllen dieser mit einem Metall (23), und
- Herstellen einer zweiten Ebene (10) von leitenden Mustern (11a, 11b) auf der Oberfläche der Standardzone (5a) und der Sicherheitszone (5b).

7. Verfahren nach Anspruch 4, **dadurch gekennzeichnet, dass** die kontaminierenden Partikel (19) einen Durchmesser aufweisen, der im Wesentlichen gleich oder größer als der der Verbindungslöcher ist.

8. Verfahren nach Anspruch 4, **dadurch gekennzeichnet, dass** die kontaminierenden Partikel (19) Kugeln aus einem polymeren Material, das in Reinräumen verwendet werden kann, und vorzugsweise aus Polystyrol oder Polymethylmethacrylat sind.

9. Verfahren nach einem der Ansprüche 4 bis 8, **dadurch gekennzeichnet, dass** die kontaminierenden Partikel (19) durch Verdampfen oder durch Schleuderbeschichten mit einer flüssigen Lösung, die eine Konzentration von etwa 0,5 bis 2 Massen-%, abhängig von der ausgewählten Größe der kontaminierenden Partikel, abgeschieden werden.

10. Verfahren nach einem der Ansprüche 4 bis 9, **dadurch gekennzeichnet, dass** es einen Schritt des thermischen Temperns nach dem Aufbringen der kontaminierenden Partikel (19) umfasst.

11. Verfahren nach einem der vorhergehenden Ansprüche, **dadurch gekennzeichnet, dass** es das Herstellen einer Vielzahl von zufälligen Verbindungsstrukturen und einer Vielzahl von entsprechenden Ebenen von leitenden Mustern umfasst.

12. Verfahren nach einem der vorhergehenden Ansprüche, **dadurch gekennzeichnet, dass** die Sicherung des integrierten Schaltkreises beim Herstellen der Logikschaltkreise hergestellt wird.

13. Gesicherter integrierter Schaltkreis, der durch das Verfahren nach einem der vorhergehenden Ansprüche hergestellt wird.

## Claims

1. A method for securing an integrated circuit during the production thereof, said method including the following steps:
- delimitation of said integrated circuit (1) in a first surface area called standard area (5a) and in a second surface area called safety area (5b),
- random degradation of an interconnection structure (7b) of said safety area (5b) by the introduction of a contaminating element (19) configured to randomly deteriorate a portion of the interconnections thus forming a physical unclonable function modelled by a random electrical continuity interrogatable by a challenge-response authentication protocol, and said method being **characterised by** the following step:
- application of a voltage which is higher than a read voltage to break down fragile partial interconnections.

2. The method according to claim 1, **characterised in that** the random interconnection structure (7b) is formed between at least two corresponding levels (8, 10) of conductive patterns (9b, 11b), a portion of the conductive patterns being configured to receive a challenge, while another portion of the conductive patterns is configured to provide the response to said challenge.

3. The method according to claim 1 or 2, **characterised in that** the securing of the integrated circuit is integrated at the production of first electrical interconnections and includes the following steps:
- production of a first level (8) of conductive patterns (9a, 9b) on the surface of said standard (5a) and safety (5b) areas,
- deposition, on the surface of the first level (8), of conductive patterns (9a, 9b) of a first multilayer (13) comprising a barrier to a metal diffusion as well as an etching mask defining a set of interconnection holes,
- deposition, on said first multilayer (13), of at least one second layer (15) of photosensitive resin,
- optical lithography in the safety area (5b) to isolate the interconnection holes (17b) provided in this safety area.

4. The method according to claim 3, **characterised in that** it further includes the deposition of contaminating particles (19) of predetermined size and shape on the surface of the standard (5a) and safety (5b) areas, the particles (19) partially or totally obstructing in a random manner a portion of said interconnection holes (17b) of the safety area (5b).

5. The method according to claim 4, **characterised in that** it further includes the following steps:
- transfer of the obstructed or unobstructed interconnection holes in the etching mask,
- cleaning of the surface of the standard (5a) and safety (5b) areas to remove the second layer (15) of photosensitive resin and the contaminating particles (19),
- deposition, on the surface of the standard (5a) and safety (5b) areas, of at least one third layer (21) of photosensitive resin,
- optical lithography in the standard area (5a) to isolate the interconnection holes (17a) provided in the standard area (5a).

6. The method according to claim 5, **characterised in that** it further includes the following steps:
- transfer of the interconnection holes (17a) from the standard area (5a) into the etching mask,
- re-cleaning of the surface of the standard (5a) and safety (5b) areas to remove the third photosensitive resin layer (21),
- transfer into the metal diffusion barrier layer and filling of the interconnection holes (17a, 17b) with a metal (23) in the standard (5a) and safety (5b) areas, and
- production of a second level (10) of conductive patterns (11a, 11b) on the surface of the standard (5a) and safety (5b) areas.

7. The method according to claim 4, **characterised in that** the contaminating particles (19) have a diameter which is substantially equal to or greater than that of the interconnection holes.

8. The method according to claim 4, **characterised in that** the contaminating particles (19) are beads made of a polymer material which can be used in a clean room, and preferably made of polystyrene or poly(methyl methacrylate).

9. The method according to any one of claims 4 to 8, **characterised in that** the contaminating particles (19) are deposited by vaporisation or by spinning a liquid solution having a concentration of about 0.5% to 2% by mass selected according to the particle size.

10. The method according to any one of claims 4 to 9, **characterised in that** it includes, after the deposition of the contaminating particles (19), a thermal annealing step.

11. The method according to any one of the preceding claims, **characterised in that** it includes the production of a plurality of random interconnection structures and a plurality of corresponding levels of conductive patterns.

12. The method according to any one of the preceding claims, **characterised in that** the securing of the integrated circuit is carried out at the manufacture of logic circuits.

13. A secure integrated circuit produced by the method according to any one of the preceding claims.
